# FASCICULE DE BREVET EUROPEEN

(11) **EP 0 630 088 B1**
(45) Date de publication et mention de la délivrance du brevet: **26.08.1998**
(21) Numéro de dépôt: 94410042.9
(22) Date de dépôt: 08.06.1994
(51) Int. Cl.: H02B 1/30

(54) **Châssis pivotant d'armoire électrique et armoire comportant un tel châssis pivotant**
Schwenkrahmen für einen Schaltschrank und Schrank mit einem solchen Schwenkrahmen
Pivoting frame for an electric cabinet and a cabinet with such a pivoting frame

(30) Priorité: 18.06.1993 FR 9307405
(43) Date de publication de la demande: 21.12.1994
(73) Titulaire: SCHNEIDER ELECTRIC SA, 92100 Boulogne Billancourt (FR)
(72) Inventeur: Meyer, Jean-Claude, F-38050 Grenoble Cédex 09 (FR)
(74) Mandataire: Hecké, Gérard

(56) Documents cités:
- EP-A- 0 338 341
- DE-A- 3 917 985

## Description

L'invention a pour objet un perfectionnement à des armoires et plus précisément à des châssis pivotants d'armoire permettant de modifier à volonté l'assemblage des pièces constituant le châssis en fonction des appareillages montés dans les armoires.

On connaît déjà des châssis pivotants d'armoire comportant un cadre et au moins un cache fixé au cadre. Le cadre dans lequel est monté un appareillage de profondeur donnée comprend deux montants verticaux et deux traverses horizontales. Un tel chassis pivotant est connu du document EP-A-0 338 341, par exemple.

Compte tenu de la profondeur de l'appareillage, le cadre est le plus souvent "décentré" vers l'axe de pivotement du châssis pivotant pour garder la possibilité de le faire pivoter et ainsi d'avoir accès à la face arrière de l'appareillage. Lorsque la profondeur de l'appareillage monté dans le cadre est peu importante, le cadre est "centré" par rapport à l'axe médian vertical du châssis pivotant. Dans ce cas, un cache est fixé à chacun des montants verticaux du cadre.

La position d'assemblage du cadre et des caches est donc habituellement déterminée par la profondeur de l'appareillage monté.

Il apparaît que le remplacement d'un appareillage de profondeur donnée par un appareillage de profondeur différente, notamment plus grande, entraîne, en règle générale, le changement du châssis pivotant de l'armoire ou du moins de certaines de ses pièces.

En effet, le cadre n'est pas adapté pour être assemblé au(x) cache(s) dans une position indifféremment "décentrée" ou "centrée" par rapport à l'axe médian vertical du châssis pivotant.

Cela est préjudiciable pour le fabricant et pour l'utilisateur. Ainsi, le fabricant doit maintenir des stocks importants de pièces pour pouvoir faire face à des commandes de types de châssis pivotants différents. Pour l'utilisateur, cela présente l'inconvénient que, si à un moment donné, le châssis pivotant est bien adapté à l'appareillage contenu dans l'armoire, il ne le sera peut-être plus, quelque temps plus tard, si l'appareillage est changé. Dans ces conditions, l'utilisateur possède un matériel qui ne répond plus parfaitement à ses besoins et il lui faut en changer.

L'invention a pour objet d'éviter ces inconvénients.

A cet effet, le châssis pivotant d'armoire conforme à l'invention comporte un cadre, de forme particulière, modulable, parfaitement adapté pour être assemblé aux caches indifféremment dans la position dite "centrée" ou "décentrée" par rapport à l'axe médian vertical du châssis pivotant, et sans qu'il soit nécessaire de prévoir, dans la position "centrée", des moyens de fixation, en articulation du châssis pivotant à l'armoire, sur l'un des caches comme cela était souvent le cas dans l'art antérieur. De plus, les caches, selon l'invention, ont des dimensions adaptées aux deux modes d'assemblage.

Le châssis pivotant selon l'invention est du type formé d'un cadre rectangulaire comprenant deux traverses horizontales et deux montants verticaux et d'au moins un cache, il se caractérise en ce que le premier montant vertical est fixé aux traverses à l'une de leurs extrémités libres et le second montant vertical, s'étendant entre les traverses, est écarté d'une distance déterminée des extrémités libres opposées des traverses, définissant une surface ouverte entre lesdites extrémités libres opposées des traverses et ledit second montant, et que le châssis comprend en outre un premier cache, de hauteur réduite, égale à celle du second montant vertical, et un second cache ; le premier cache de hauteur réduite comprend des premiers moyens de fixation, coopérant avec des moyens de fixation du second montant vertical, pour s'assembler avec ce second montant en occupant ainsi ladite surface ouverte, et des seconds moyens de fixation au second cache, le second cache comprend des premiers moyens de fixation, coopérant avec des moyens de fixation du premier montant vertical et des seconds moyens de fixation coopérant avec lesdits seconds moyens du premier cache, ce second cache pouvant s'assembler au premier cache ou au premier montant vertical.

Avec un tel châssis pivotant, il apparaît que l'armoire constituée présente une souplesse d'emploi inconnue à ce jour, puisque, lorsque la profondeur de l'appareillage monté est peu importante, chaque cache pourra être fixé à un montant vertical du cadre et lorsque la profondeur de l'appareillage est plus importante, les deux caches pourront être assemblés entre eux, pour constituer un panneau rigide, fixé à un seul montant vertical. De plus, les zones ou sont montés les moyens de fixation en articulation du châssis pivotant à l'armoire demeurent sur les traverses du cadre dans les deux modes d'assemblage ; il est donc inutile d'installer de tels éléments de fixation sur l'un des caches lorsque l'on passe de la position "décentrée" à celle "centrée" .

Le passage d'un mode d'assemblage à l'autre se fait aisément, sans changer les pièces du châssis pivotant, simplement en les assemblant différemment. L'utilisateur peut ainsi à tout moment adapter le châssis pivotant de l'armoire pour répondre à ses besoins.

L'invention et sa mise en oeuvre apparaîtront plus clairement à l'aide de la description qui va suivre faite en référence aux dessins annexés dans lesquels :
- la figure 1 montre en perspective, schématiquement, l'armature de l'armoire avec son châssis pivotant en position fermée,
- la figure 2 montre de façon schématique, vu de face, un premier mode d'assemblage dit "décentré" des caches et du cadre du châssis pivotant, monté dans l'armature de l'armoire,
- la figure 3 est une vue par dessus faite selon la flèche III de la figure 2,
- la figure 4 est une vue en perspective, éclatée, du second mode d'assemblage dit "centré" des caches et du cadre du châssis pivotant,
- la figure 5 montre une vue du dessus de la figure 4 faite selon la flèche V de cette figure,
- la figure 6 montre de façon schématique, en vue de face, les pièces du châssis pivotant assemblées selon le mode "centré", le châssis pivotant étant monté dans l'armature de l'armoire,
- la figure 7 est une vue du dessus faite selon la flèche VII de la figure 6.

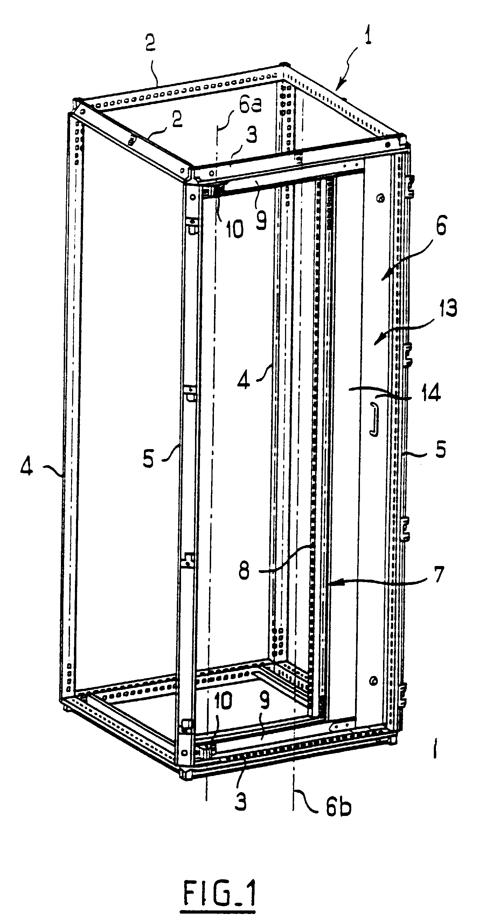

On se référera tout d'abord aux figures 1 à 3 à l'aide desquelles on expliquera le premier mode d'assemblage dit "décentré", permettant de monter des appareillages de profondeur importante dans le cadre du châssis pivotant.

Comme illustré à la figure 1, on aperçoit l'armature métallique 1 d'une armoire, comprenant huit traverses horizontales 2 dont deux frontales 3 et quatre montants verticaux 4 dont deux frontaux 5 définissant le contour d'un parallélogramme rectangle.

Les termes "horizontal" et "vertical" utilisés dans la présente demande font référence aux directions respectives des traverses et des montants de l'armature de l'armoire lorsque celle-ci est dans une position normale d'utilisation.

Les traverses 3 et les montants 5 délimitent la face avant de l'armature de l'armoire qui est occupée par un châssis pivotant 6, de préférence à structure métallique, s'articulant autour de l'axe vertical 6a sur l'armature 1. Le châssis pivotant, d'axe médian vertical 6b, comprend un cadre 7 comportant deux montants verticaux 8 et deux traverses horizontales 9. Les montants 8 sont fixés aux traverses 9 par tout moyen connu de l'homme de l'art et notamment par soudure. Le châssis pivotant comprend en outre un panneau 13 de fermeture, destiné à occuper la surface restante entre le cadre 7 et le montant frontal droit 5 de l'armature 1. Selon l'invention, dans le mode d'assemblage "décentré", le panneau 13 est constitué de deux caches 14.

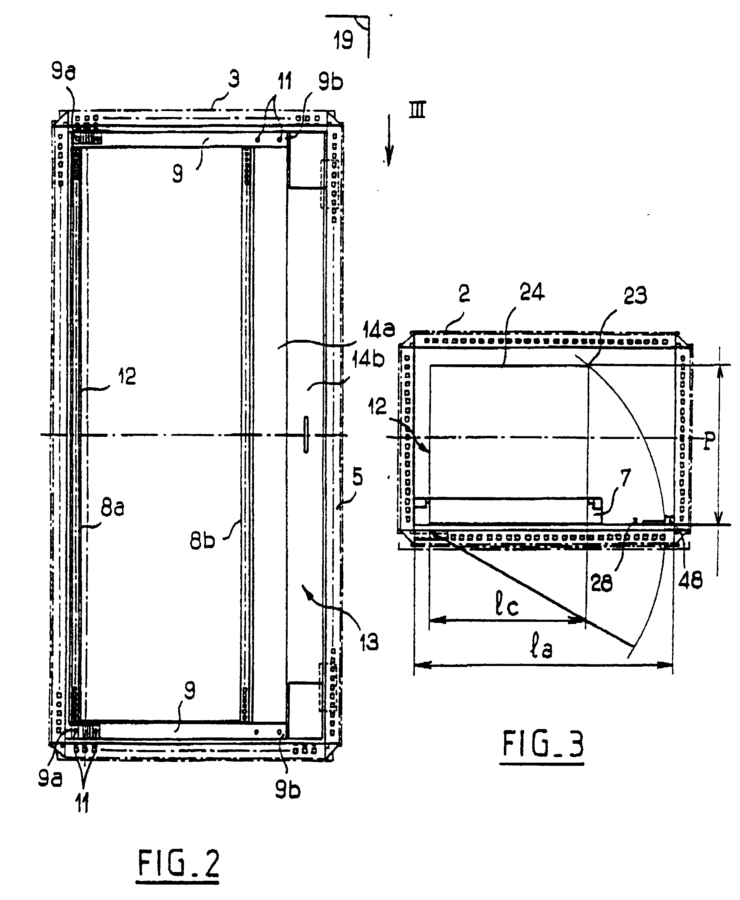

En se référant aux figures 2 et 3, on voit que dans le cadre rectangulaire 7 pourra être logé un appareillage 12 dont seul le contour a été représenté et dont la hauteur et la largeur seront sensiblement égales à celle de ce cadre. On notera que ce cadre rectangulaire 7 comprend un premier et un second montant vertical respectivement repérés en 8a et 8b et deux traverses 9 comportant, chacune, une première extrémité libre 9a et une seconde extrémité libre opposée 9b. Le premier montant vertical 8a est fixé à la première extrémité 9a de chaque traverse. Le second montant vertical 8b s'étend entre les traverses 9 et est écarté d'une distance déterminée de la seconde extrémité libre opposée 9b de chaque traverse, définissant ainsi une surface ouverte entre les extrémités 9b des traverses et le montant 8b. Tel qu'illustré, le premier montant 8a a une hauteur sensiblement égale à celle du second montant 8b et s'étend donc entre les traverses 9.

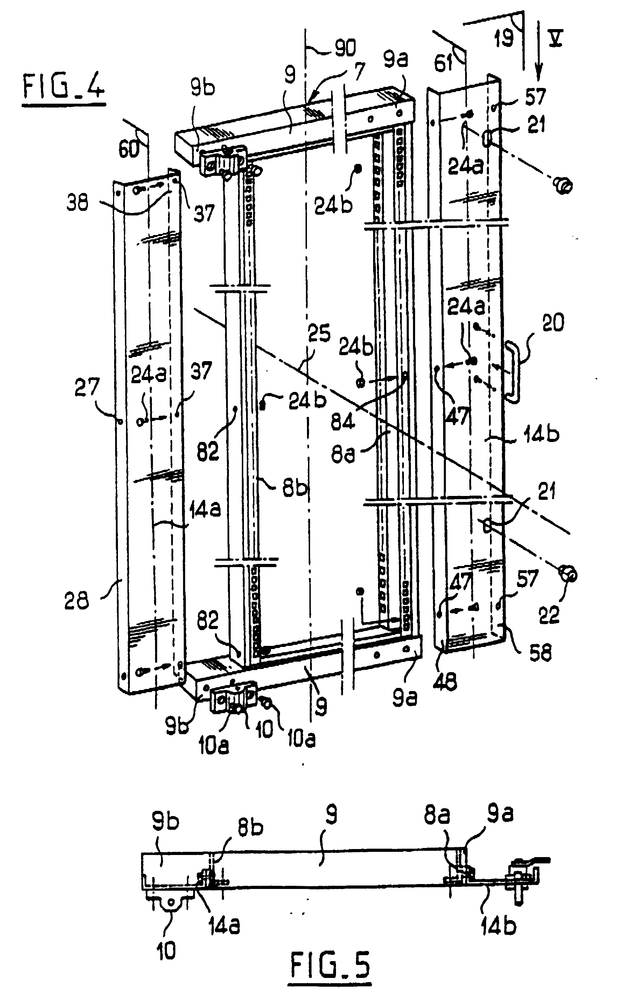

En outre, les traverses du cadre comprennent des éléments de charnière 10 permettant le pivotement du châssis pivotant sur l'armature 1 grâce à des tourillons non représentés. De façon plus précise, chaque traverse 9 présente en symétrie par rapport à l'axe médian vertical 90 des traverses, à chacune de ses extrémités libres une paire d'orifices pré-perçés 11 pouvant recevoir des vis 10a serrées au moyen d'écrous non représentés et permettant de fixer les éléments de charnière 10. Les paires d'orifices permettent de monter les éléments de charnière 10 aux extrémités 9a des traverses dans le mode d'assemblage "décentré" et de les monter aux extrémités opposées 9b des traverses dans le mode d'assemblage "centré", tel qu'illustré à la figure 4.

Le châssis pivotant comprend deux caches de largeur avantageusement égale dont le premier 14a, a une hauteur réduite, sensiblement égale à celle du second montant vertical 8b et le second cache 14b, a une hauteur sensiblement égale à celle du cadre.

Tels qu'illustrés de façon plus précise aux figures 3 et 4, les caches 14a et 14b se présentent sous la forme d'une plaque dont les bords respectifs 28, 38 et 48, 58 sont repliés, les caches ayant alors une forme générale sensiblement de U majuscule.

Le cache 14b comprend de plus une poignée 20 et des orifices 21 destinés à recevoir des verrous 22.

En se rapportant à nouveau à la figure 4, on voit que le cache 14a de hauteur réduite comprend des orifices 37, en l'espèce placés régulièrement le long du bord 38. Ces orifices 37 débouchent chacun dans un orifice 82 correspondant, ménagé en regard dans le montant vertical 8b. Une vis 24a, serrée par un écrou 24b, est montée à travers chaque orifice 37 qui coopère avec un orifice 82, pour assembler, de manière amovible, le montant vertical 8b au premier cache de hauteur réduite, lequel occupe ainsi la surface ouverte définie par les extrémités libres 9b des traverses et le montant 8b. De même, le second cache 14b comprend des orifices 47 disposés régulièrement le long du bord 48. A chacun de ces orifices 47 correspond un orifice 84 ménagé en regard dans le montant 8a. Ces orifices coopèrent entre eux, maintenus ensemble par une vis 24a les traversant et serrée par un écrou 24b, permettant d'assembler, de manière amovible, le deuxième cache 14b au montant 8a dans le mode d'assemblage "centré". Ce deuxième cache 14b comprend également des orifices 57, situés de façon régulière, sur le bord 58. A chacun de ces orifices 57 correspond un orifice 27, ménagé en regard, sur le bord 28 du cache 14a. Dans le mode d'assemblage "décentré", le second cache 14b peut être assemblé, de manière amovible, au premier cache 14a, une vis 24a traversant les orifices 27 et 57 et étant serrée par un écrou 24b.

De l'étude de la figure 4, il ressort que chaque cache 14a et 14b, y compris ses orifices respectifs 27, 37 et 47, 57, est symétrique par rapport à son plan médian vertical respectivement 60 et 61.

Ainsi, il apparaît que le cache 14a peut être indifféremment assemblé au montant vertical 8b par son bord 28 ou son bord 38.

De même, pour le cache 14b qui peut indifféremment être assemblé au montant vertical 8a ou au cache 14a par son bord 48 ou son bord 58.

On se rapportera maintenant à la figure 3 pour décrire l'ouverture du châssis pivotant. On retrouve l'armature 1 comportant dans sa face avant le châssis pivotant 6 en position fermée. Un appareillage 12 d'une profondeur P est monté dans le cadre 7. Compte tenu de la profondeur de l'appareillage et de l'angle que décrit le coin arrière droit 23 de cet appareillage lorsque l'on fait pivoter le châssis pivotant autour de l'axe 6a, la largeur lₐ de l'armature 1 doit être supérieure à celle l_{c} du cadre 7 défini par les montants 8 et les traverses 9. La largeur lₐ minimale permettant de faire pivoter le châssis pivotant et ainsi d'avoir accès à la face arrière 24 de l'appareillage, notamment en cas de panne, peut être aisément déterminée par l'homme de l'art.

Le passage du mode d'assemblage "décentré" au mode d'assemblage "centré" apparaîtra clairement en relation avec ce qui précède et notamment par l'examen des figures 4 à 7.

En effet, ces figures représentent le châssis pivotant 6 dont les pièces sont assemblées selon le mode "centré".

On se reportera maintenant à la figure 4, on retrouve, de façon générale, les mêmes pièces que celles décrites aux figures précédentes. En particulier, on retrouve le cadre 7 avec ses traverses 9, ses deux montants verticaux 8a et 8b, ainsi que les deux caches 14. Par rapport à la position du cadre illustré aux figures 1 à 3, le cadre représenté aux figures 4 à 7 a subi une rotation de 180° par rapport à un axe médian 25, perpendiculaire au plan 19.

Par rapport au mode d'assemblage "décentré" du cadre et des caches, tel qu'illustré à la figure 2, le passage au mode d'assemblage "centré" se fait aisément après avoir démonté le châssis pivotant 6 de l'armature 1. Le cache 14b est désolidarisé du cache 14a, puis l'on tourne l'ensemble constitué du cadre 7 et du cache 14a de 180° par rapport à l'axe 25 ; le cache 14b peut alors être assemblé au montant vertical 8a.

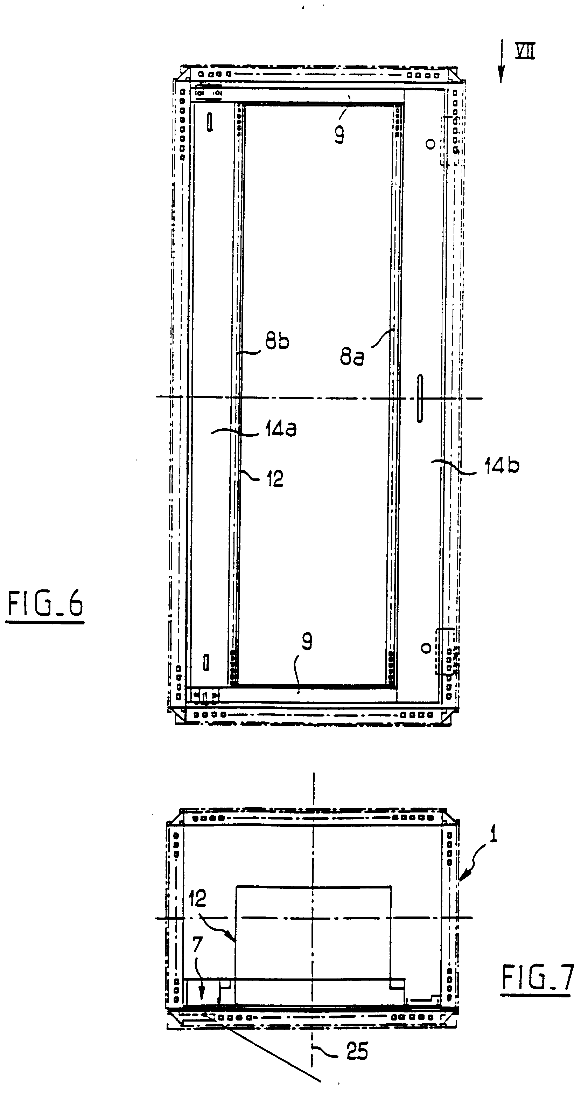

Afin de pouvoir remonter le châssis pivotant dans l'armature 1, les éléments de charnière 10 qui, dans le mode d'assemblage "décentré", étaient montés aux extrémités 9a des traverses 9, sont démontés et fixés aux extrémités 9b des traverses par des vis, serrées par des écrous, introduites dans la paire d'orifices pré-perçés 11. Le châssis pivotant est alors remonté dans l'armature 1 tel qu'illustré à la figure 6.

On constate que l'assemblage des pièces du châssis pivotant peut être modifié aussi souvent qu'on le souhaite sans changer aucune pièce, par modification du montage du cache 14b et des éléments de charnière 10 par rapport au cadre 7.

En se référant à la figure 5, on voit en vue de dessus, de façon plus précise, l'assemblage en mode "centré" des deux caches respectivement au montant 8a et 8b du cadre ainsi que la fixation de l'élément de charnière 10 à l'extrémité 9b de la traverse 9.

La figure 7 permet de voir en vue du dessus, la position de l'appareillage 12 monté dans le cadre 7 lorsque celui-ci est "centré" par rapport à l'axe 6b du châssis pivotant.

Les perfectionnements de l'invention s'appliquent tout particulièrement aux armoires pour le rangement d'appareillage électrique et électronique.

Selon une variante de l'invention, le cache 14a peut être fixé de manière définitive au montant 8b, ou bien encore les deux caches peuvent avoir des largeurs différentes. De plus, il est concevable que les premiers moyens de fixation du cache 14b coopérant avec des moyens de fixation du premier montant vertical 8a soient différents des seconds moyens de fixation du second cache 14b coopérant avec les seconds moyens de fixation du premier cache 14a.

Tel qu'illustré dans les figures, les caches sont assemblés entre eux et/ou aux montants verticaux grâce à des moyens de fixation comprenant une vis traversant les orifices respectifs en regard des deux caches ou d'un cache et d'un montant et serrée par un écrou, cependant les caches pourraient être assemblés, de manière amovible, entre eux et/ou aux montants verticaux par tout autre moyen de fixation connu.

De plus, tel qu'illustré, les orifices 57 du cache 14b sont symétriques aux orifices 47 par rapport à l'axe 61, si cela n'avait pas été le cas, on aurait pu prévoir des orifices 57 également sur le bord 48 permettant ainsi d'assembler le cache soit au montant 8a, soit au cache 14a par son même bord 48, les orifices pour les verrous 22 auraient ainsi pu être utilisés dans les deux modes d'assemblage.

On peut également envisager tout moyen connu de fixation en articulation du châssis pivotant à l'armoire autre que des éléments de charnière dans lesquels sont introduits des tourillons.

## Revendications

1. Châssis pivotant d'armoire destinée à recevoir un appareillage notamment électrique ou électronique, du type formé d'un cadre rectangulaire (7) comprenant deux traverses horizontales (9) et deux montants verticaux (8) et d'au moins un cache (14), caractérisé en ce que le premier montant vertical (8a) est fixé aux traverses à l'une de leurs extrémités libres (9a) et le second montant vertical (8b) s'étend entre les traverses et est écarté d'une distance déterminée de leurs extrémités libres opposées (9b), définissant une surface ouverte entre lesdites extrémités libres opposées des traverses et ledit second montant; et que le châssis comprend de plus un premier cache (14a), de hauteur réduite, égale à celle du second montant vertical (8b), et un second cache (14b) ; le premier cache (14a) de hauteur réduite comprend des premiers moyens (37) de fixation, coopérant avec des moyens (82) de fixation du second montant vertical (8b), pour s'assembler avec ce second montant en occupant ainsi ladite surface ouverte, et des seconds moyens (27) de fixation au second cache (14b) ; le second cache (14b) comprend des premiers moyens (47) de fixation, coopérant avec des moyens (84) de fixation du premier montant vertical (8a) et des seconds moyens (57) de fixation coopérant avec lesdits seconds moyens (27) du premier cache (14a), ce second cache (14b) pouvant s'assembler au premier cache (14a) ou au premier montant vertical (8a).

2. Châssis pivotant d'armoire selon la revendication 1, caractérisé en ce que chaque cache (14a, 14b), y compris ses moyens de fixation précités (27, 37 ; 47, 57) est symétrique par rapport à un plan médian vertical (60 ; 61).

3. Châssis pivotant d'armoire selon l'une quelconque des revendications 1 à 2, caractérisé en ce que le premier montant (8a) a une hauteur égale à celle du second montant (8b) et s'étend entre les traverses (9).

4. Châssis pivotant d'armoire selon l'une quelconque des revendications 1 à 3, caractérisé en ce que le second cache (14b) a une hauteur égale à celle du cadre (7).

5. Châssis pivotant d'armoire selon l'une quelconque des revendications 1 à 4, caractérisé en ce que chaque traverse (9) comprend en symétrie, à chacune de ses extrémités libres, des moyens de fixation en articulation à l'armoire.

6. Châssis pivotant d'armoire selon l'une quelconque des revendications 1 à 5, caractérisé en ce que le premier et le second cache ont une largeur sensiblement égale.

7. Armoire comportant un châssis pivotant d'armoire défini selon l'une quelconque des revendications 1 à 6.

## Patentansprüche

1. Schaltschrank-Schwenkrahmen zur Aufnahme von insbesondere elektrischen oder elektronischen Schaltgeräten, gemäß einer Bauart mit rechteckigem Grundrahmen (7), der zwei horizontale Traversen (9) und zwei vertikale Längsholme (8) sowie mindestens eine Blende (14) umfaßt, dadurch gekennzeichnet, daß der erste vertikale Längsholm (8a) an den Traversen, an einem ihrer freien Enden (9a) befestigt ist und der zweite vertikale Längsholm (8b) sich zwischen den Traversen erstreckt sowie um ein bestimmtes Maß von ihren gegenüberliegenden freien Enden (9b) zurückversetzt ist und so eine offene Fläche zwischen den genannten gegenüberliegenden freien Enden der Traversen und dem genannten zweiten Längsholm definiert, daß der Schwenkrahmen darüber hinaus eine erste Blende (14a) geringerer, der Höhe des zweiten Längsholms (8b) entsprechenden Höhe sowie eine zweite Blende (14b) umfaßt, wobei die erste Blende (14a) geringerer Höhe erste Befestigungsmittel (37), die mit Befestigungsmitteln (82) des zweiten vertikalen Längsholms (8b) zusammenwirken, um die Blende mit diesem zweiten Längsholm zu verbinden und so die genannte freie Fläche auszufüllen, sowie zweite Befestigungsmittel (27) zur Befestigung an der zweiten Blende (14b) aufweist, und die zweite Blende (14b) erste Befestigungsmittel (47), die mit Befestigungsmitteln (84) des ersten vertikalen Längsholms (8a) zusammenwirken, sowie zweite Befestigungsmittel (57) aufweist, die mit den genannten zweiten Mitteln (27) der ersten Blende (14a) zusammenwirken, wobei diese zweite Blende (14b) mit der ersten Blende (14a) oder mit dem ersten vertikalen Längsholm (8a) verbunden werden kann.

2. Schwenkrahmen nach Anspruch 1, dadurch gekennzeichnet, daß jede Blende (14a, 14b) einschließlich ihrer jeweiligen genannten Befestigungsmittel (27, 37; 47, 57) in bezug auf eine senkrechte Mittelebene (60; 61) symmetrisch aufgebaut ist.

3. Schwenkrahmen nach irgendeinem der Ansprüche 1 bis 2, dadurch gekennzeichnet, daß der erste Längsholm (8a) eine der Höhe des zweiten Längsholms (8b) entsprechende Höhe aufweist und sich zwischen den Traversen (9) erstreckt.

4. Schwenkrahmen nach irgendeinem der Ansprüche 1 bis 3, dadurch gekennzeichnet, daß die zweite Blende (14b) eine der Höhe des Grundrahmens (7) entsprechende Höhe aufweist.

5. Schwenkrahmen nach irgendeinem der Ansprüche 1 bis 4, dadurch gekennzeichnet, daß jeder Traverse (9) in symmetrischer Anordnung an jedem ihrer freien Enden Mittel zur gelenkigen Befestigung am Schaltschrank aufweist.

6. Schwenkrahmen nach irgendeinem der Ansprüche 1 bis 5, dadurch gekennzeichnet, daß die erste und die zweite Blende eine annähernd gleiche Breite aufweisen.

7. Schaltschrank mit einem Schaltschrank-Schwenkrahmen gemäß irgendeinem der Ansprüche 1 bis 6.

## Claims

1. A pivoting framework of a cabinet intended to receive switchgear equipment notably electrical or electronic, of the type formed by a rectangular frame (7) comprising two horizontal cross-members (9) and two vertical uprights (8) and at least one cover plate (14), characterized in that the first vertical upright (8a) is fixed to the cross-members at one of their free ends (9a) and the second vertical upright (8b) extends between the cross-members and is separated by a set distance from their opposite free (9b), defining an open surface between said opposite free ends of the cross-members and said second upright, and that the framework comprises in addition a first cover plate (14a), of reduced height, equal to that of the second vertical upright (8b), and a second cover plate (14b) ; the first cover plate (14a) of reduced height comprises first fixing means (37), cooperating with fixing means (82) of the second vertical upright (8b) to be assembled with this second upright thus occupying said open surface, and second means (27) of fixing to the second cover plate (14b) ; the second cover plate (14b) comprises first fixing means (47) cooperating with fixing means (84) of the first vertical upright (8a) and second fixing means (57) cooperating with said second means (27) of the first cover plate (14a), this second cover plate (14b) being able to be assembled to the first cover plate (14a) or to the first vertical upright (8a).

2. The pivoting cabinet framework according to claim 1, characterized in that each cover plate (14a, 14b), including its afore-mentioned means of fixing (27, 37 ; 47, 57), is symmetrical with respect to a vertical mid-plane (60 ; 61).

3. The pivoting cabinet framework according to either one of the claims 1 to 2, characterized in that the first upright (8a) has a height equal to that of the second upright (8b) and extends between the cross-members (9).

4. The pivoting cabinet framework according to any one of the claims 1 to 3, characterized in that the second cover plate (14b) has a height equal to that of the framework (7).

5. The pivoting cabinet framework according to any one of the claims 1 to 4, characterized in that each cross-member (9) comprises in symmetry, at each of its free ends, fixing means articulating on the cabinet.

6. The pivoting cabinet framework according to any one of the claims 1 to 5, characterized in that the first and the second cover plate have an appreciably equal width.

7. A cabinet comprising a pivoting cabinet framework defined according to any one of the claims 1 to 6.
